# EUROPEAN PATENT APPLICATION

(11) **EP 1 726 844 A1**
(43) Date of publication of application: **29.11.2006**
(21) Application number: 05726658.7
(22) Date of filing: 18.03.2005
(51) Int. Cl.: F16D 25/12, F16D 25/0638

(54) **PISTON**

(30) Priority: 19.03.2004 JP 2004079573; 13.04.2004 JP 2004117975; 28.12.2004 JP 2004379319
(71) Applicant: NOK CORPORATION, Tokyo 105-8585 (JP)
(72) Inventor: KANZAKI, Yoshiyuki, NOK CORPORATION, Fukushima-shi, Fukushima 960-1193 (JP); NISHIMURA, Nobuhiro, NOK CORPORATION, Fukushima-shi, Fukushima 960-1193 (JP)
(74) Representative: TBK-Patent
(86) International application number: PCT/JP2005/004964
(87) International publication number: WO 2005/090813

(57) **Abstract**

A part of a rubber layer of the base section of a piston seal is replaced with a reinforcement ring with high rigidity, and a part of the reinforcement ring reaches the root of a seal lip. This provides the piston seal with required rigidity. Further, providing an outer diameter side radial section on a piston body secures a contact width coming into contact with a section to be pressed. A piston has a piston body (111) having a clutch pressing section (111f) provided so as to be in surface-contact with a multiple disc clutch (105), a reinforcement ring (112) fitted on the outer periphery of an outer cylinder section (111e) of the piston body, and an outer peripheral seal lip (113a) provided on the reinforcement ring and in sealing contact with the inner peripheral surface (102a) of the outer peripheral section of a housing (102).

## Description

### TECHNICAL FIELD

The present invention relates to a piston applicable to, for example, automobile automatic transmission and the like.

### BACKGROUND ART

Some of automobile automatic transmissions changes over a clutch by connecting/disconnecting a drive plate on a drive shaft side with/from a driven plate on a driven shaft side by means of a piston which is actuated hydraulically within a housing. A piston seal made of rubber elasticmaterial is formed integrally on this kind of the piston as disclosed in, for example, patent document 1.
Patent document 1: Japanese Patent Application Laid-Open No.9-210088

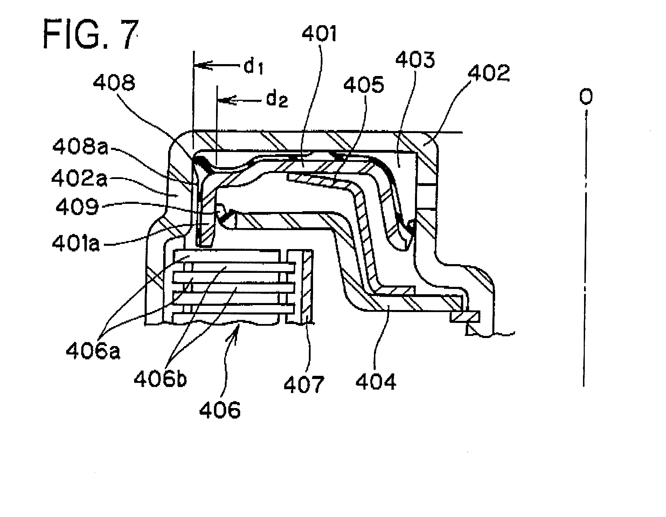

FIG. 7 is a half sectional view showing a conventional piston unit (piston) described in the patent document 1 cut out along a plane passing an axis o with part of an automatic transmission. That is, this piston 401 is displaced downward in the same Figure resisting an biasing force of a spring 405 supported by a spring retainer 404 when a pressure chamber 403 between the piston 401 and a housing 402 is pressurized, so that a pressing section formed at the bottom end of its outer peripheral section 401a presses the drive plate 406a of a multiple disc clutch 406 to the driven plate 406b so as to attain frictional engagement and transmit a drive torque of the drive shaft to the driven shaft through the housing 402, the multiple disc clutch 406 and a clutch hub 407.

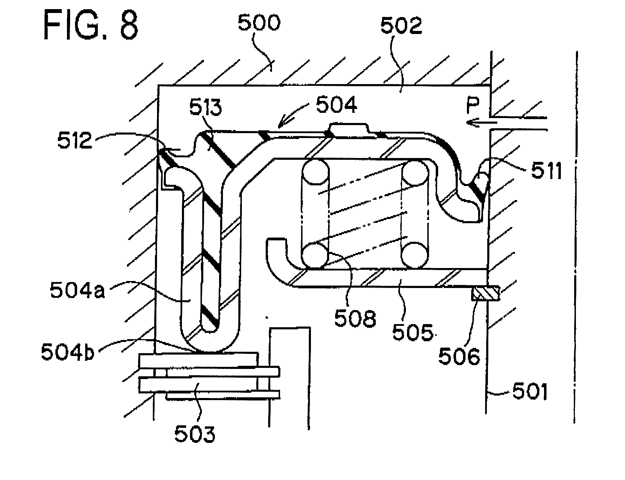

On the other hand, as regards another automatic transmission for use in automobile and the like, art for controlling the transmission by controlling the multiple disc clutch with the pressing force of a hydraulic piston which is moved hydraulically in a rotating condition has been known widely as shown in FIG. 8.

FIG. 8 is a schematic half sectional view for explaining the schematic structure of a clutch section of the automatic transmission.

As shown in FIG. 8, an annular piston insertion hole 502 is formed with the inner peripheral surface of a housing 500 and the outer peripheral surface of a drive shaft 501 fixed to each other and sealed.

A multiple disc clutch 503 is provided inside the housing 500 and an annular piston member 504 is disposed in the piston insertion hole 502 such that it is movable axially.

An annular spring retainer 505 for restricting the motion in the axial direction is mounted on the outer periphery of the drive shaft 501. This spring retainer is restricted from moving by a stopper 506 provided in the drive shaft 501.

A seal lip 511 for sealing the outer peripheral surface of the drive shaft 501 is provided on the inner peripheral surface of the piston member 504 and a seal lip 512 which makes a sealing contact with the inner peripheral surface of the housing 500 is provided on the outer peripheral surface of the piston member 504. A hydraulic chamber is formed by sealing the piston insertion hole 502 with the seal lips 511, 512. These seal lips 511, 512 are constituted of rubber elastic body.

With the above described structure, when hydraulic pressure (indicated with an arrow P) is applied so that the pressure is raised, the piston member 504 is stroked to the spring retainer 505 side (downward in the same Figure) resisting the biasing force of the spring 508 so as to press the multiple disc clutch 503 with the end section (R section) 504b of a U-shaped sectional section 504a on the outer periphery side of the piston member 504. Consequently, a clutch plate provided on the housing 500 side makes a frictional contact with the clutch plate on the driven shaft side (not shown) so as to transmit a rotation force of the housing 500 to the driven shaft.

In this way, the piston member 504 functions as a bonded piston seal which moves axially by receiving hydraulic pressure and includes base material integrally formed with rubber elastic body 513 constituting the seal lips 511, 512. Such piston member is disclosed in, for example, Patent document 2.
Patent document 2: Japanese Patent Application Laid-Open No.11-351273
Patent document 3: Japanese Patent Application Laid-Open No.9-257058

### DISCLOSURE OF THE INVENTION

### PROBLEM TO BE SOLVED BY THE INVENTION

In a piston 401 of a conventional piston unit shown in FIG. 7, a sealing diameter d₁ (inner diameter of the outer peripheral cylindrical section 402a of the housing 402) of the piston seal 408 which is provided integrally on the outer peripheral section of the piston 401 and makes a firm contact with the inner peripheral surface of the outer peripheral cylindrical section 402a of the housing 402, the position of the pressing section to the multiple disc clutch 406 of the outer peripheral cylindrical section 401a of the piston 401 and a sealing diameter d2 (inner diameter of the outer peripheral cylindrical section 401a of the piston 401) of the spring retainer seal 409 which is provided integrally on the outer periphery of the spring retainer 404 supporting the spring 405 and makes a firm contact with the inner peripheral surface of the outer peripheral cylindrical section 401a of the piston 401, and the like are determined depending on the layout of components nearby, required performance and the like. Thus, a difference between the sealing diameters d1 and d2 may increase depending on the positional relation and the like between the multiple disc clutch 406 and the piston 401 and such a case is met by increasing the thickness of a rubber layer 408a formed on the outer peripheral cylindrical section 401a of the piston 401 and having the piston seal 408 in the diameter direction.

However, if the thickness of the rubber layer 408a having the piston seal 408 is increased in the radial direction, deformation of the piston seal 408 due to hydraulic pressure charged into the pressure chamber 403 is increased so that contact area and contact load thereof relative to the inner peripheral surface of the outer peripheral cylindrical section 402a of the housing 402 are increased, thereby inducing early abrasion and gouging of the piston seal 408 leading to reductions of pressure resistance and durability of the piston seal 408.

On the other hand, it is necessary to form a pressing surface in the radial direction of the piston member 504 as shown in FIG. 8 between the outer peripheral surface of the drive shaft 501 and the inner peripheral surface of the housing 500 and thus, the U-shaped sectional section 504a having a U-shaped section is provided in order to form this integrally with sheet metal. Because this U-shaped sectional section 504a is so constructed that its R section 504b presses the multiple disc clutch (pressing object section) 503, it is difficult to secure a sufficient contact width in the multiple disc clutch 503 (If the width in the radial direction of the U-shaped sectional section is increased, it may interfere with the inner peripheral surface of the housing 500 and the retainer 505. If a flat surface is provided on the tip end section of the U-shaped sectional section, stress is concentrated on that section thereby worsening its strength). Thus, the contact pressure of R section 504b increases so that abrasion or deformation increases when it bears use (long period use or long hour use) and consequently, the characteristics of the clutch change due to changes in the pressure applied to the surface with a time passage, which is a problem to be solved.

In manufacturing viewpoints, the U-shaped sectional section 504a has a high difficulty of being produced to a ring (manufacturing) thereby increasing the quantity of manufacturing processes, which is another problem to be solved.

In product quality viewpoints, load applied on material at the time of bending of the sheet metal increases because the cross section is U-shaped so that cracks are likely to occur in R section on the inner peripheral side of the U-shaped sectional section 504a, which is a problem to be still another problem to be solved. Further, R section on the inner peripheral side of the U-shaped sectional section 504a cannot be checked sufficiently about its appearance, which is yet still another problem to be solved.

Bonding treatment is necessary to burn rubber elastic body onto the piston member 504 and it previously needs to be cleaned sufficiently before in order to secure bonding strength of adhesive agent. Particularly if the gap in a valley (inside) of the U-shaped sectional section 504a is small, cleaning may be done insufficiently so that bonding of the rubber elastic body is insufficient thereby possibly causing peeling.

Because the rubber elastic body needs to be poured into the valley (inside) of the U-shaped sectional section 504a, an excessive amount of the rubber elastic body is needed and if the rubber elastic body does not flow appropriately, there is a fear that molding failure may occur.

The present invention has been achieved in views of these problems and an object of the invention is to provide a structure capable of preventing early abrasion and drop of pressure resistance and durability due to increases in contact surface and contact load of the piston seal regardless of the size of the piston main body and the sealing diameter of a piston seal formed integrally with the piston.

Another object of the invention is to provide a piston which secures a contact width coming into contact with a pressing object section and achieves improvement of the quality by reforming the U-shaped sectional section into a separation type.

### MEANS FOR SOLVING THE PROBLEM

To achieve the above-mentioned object, the present invention provides a piston comprising:
a piston main body constituted of a radial section, an axial section extending in a direction of the axial direction from an outer diameter end section of the radial section, and an outer diameter side radial section extending to the radially outward direction from an end section on a side in the axial direction of the axial section, the piston main body being provided movably in the axial direction within an annular hole;
a reinforcement member provided on the outer periphery of the axial section of the piston main body; and
a sealing member provided on the reinforcement member and having a seal lip for sealing the outer peripheral surface side of the annular hole, wherein
the reinforcement member includes a section extending to the root of the seal lip.

Because part of the rubber layer at the base section of the piston seal (sealing member) is replaced with a reinforcement ring having a higher rigidity and an end thereof reaches the root of the seal lip of the piston seal (sealing member), a required rigidity of the piston seal (sealing member) is secured regardless of the size of the piston main body and the sealing diameter of a piston seal (sealing member) formed integrally thereon, thereby preventing early abrasion and gouging due to an excessive contact area of the seal lip of the piston seal (sealing member).

Further, if the piston moves in the axial direction, a pressing object section can be pressed at a low surface pressure with a sufficient contact width by the outer diameter side radial section provided on the piston main body. Thus, if it is used in a long period or for long hours, abrasion and deformation can be suppressed as compared with conventionally thereby suppressing changes in clutch characteristics accompanied by changes in surface pressure with a passage of time. In the meantime, the length (width) of the outer diameter side radial section may be set appropriately to a sufficient contact width for pressing the pressing object section corresponding to the specification of the piston. Further, occurrence of problems originating from the conventional U-shaped sectional section can be suppressed because the U-shaped sectional section adopted in the conventional piston is reformed into a separation type (separated bodies).

In addition, according to the above construction, it is preferred that the reinforcement member is positioned by the outer diameter side radial section of the piston main body such that it is fitted over an entire area of the axial section. Particularly, the reinforcement member is preferred to be positioned on an end surface on the other side in the axial direction of the outer diameter side radial section.

By positioning the reinforcement member by bringing it into contact with the outer diameter side radial section of the piston main body, the sealing performance of the sealing member provided on the reinforcement member can be stabilized. Further, the pressing force when the outer diameter side radial section presses the pressing object section can be stabilized. Further because the strength of the fitting section can be intensified by fitting the reinforcement member over an entire area of the axial section, the sealing performance of the sealing member provided on the reinforcement member can be stabilized.

In addition, according to the above construction, it is also preferred that, when the piston main body moves to one side in the axial direction, the outer diameter side radial section presses a pressing object section provided in the vicinity of the outer peripheral surface of the annular hole in a surface contact state.

In addition, according to the above construction, there is preferably provided the piston further comprising an inner peripheral sealing member provided on the piston main body for sealing the inner peripheral surface side of the annular hole, wherein
the sealing member and the inner peripheral side sealing member are formed integrally on the piston main body having the reinforcement member after the reinforcement member is fitted to the piston main body.

In addition, according to the above construction, it is also preferred that the sealing member is formed integrally on the reinforcement member and the reinforcement member is fitted to the piston main body after the sealing member is formed integrally.

### EFFECTS OF THE INVENTION

As described above, the present invention enables to secure a required rigidity of the piston seal and prevent early abrasion and gouging of the piston seal due to an excessive contact area of the seal lip, thereby maintaining the pressure resistance and durability of the piston seal.

The present invention enables to provide a piston whose quality is improved by securing the contact width which makes contact with the pressing object section and reforming the U-shaped sectional section to a separation type.

### BRIEF DESCRIPTION OF THE DRAWINGS

FIG. 1 is a half sectional view of an example in which the piston unit of the present invention is applied to an automatic transmission of automobile by cutting along a plane passing an axis o together with part of the automatic transmission (first embodiment);
FIG. 2 is a half sectional view of another example in which the piston unit of the present invention is applied to an automatic transmission of automobile by cutting along the plane passing an axis O (second embodiment);
FIG. 3 is a half sectional view of still another example in which the piston unit of the present invention is applied to the automatic transmission of automobile by cutting along the plane passing the axis o (third embodiment);
FIG. 4 is a schematic half sectional view showing the piston according to a fourth embodiment of the present invention;
FIG. 5 is a schematic half sectional view for explaining the schematic structure of a clutch adopting bonded piston seal constituted of the piston according to the fourth embodiment of the present invention;
FIG. 6 is a schematic half sectional view showing the piston according to a fifth embodiment of the present invention;
FIG. 7 is a half sectional view of a conventional piston unit by cutting along a plane passing the axis o together with part of the automatic transmission; and
FIG. 8 is a schematic structure diagram of the clutch adopting the piston of related art.

### DESCRIPTION OF REFERENCE NUMERALS

- 101:: piston (piston unit)
- 111:: piston main body
- 112:: reinforcement ring
- 113:: outer peripheral seal (piston seal)
- 113a:: outer peripheral seal lip
- 114a:: inner peripheral seal lip
- 114:: inner peripheral seal
- 115:: membrane section
- 102:: housing
- 103:: drive shaft
- 104:: clutch hub
- 105:: multiple disc clutch
- 106:: spring
- 107:: spring retainer
- 171:: stopper
- 172:: spring retainer seal
- A, B:: pressure chamber
- 201:: bonded piston seal
- 211, 221:: piston
- 212:: piston main body
- 212a:: end plate section
- 212b:: inclined section
- 212c:: outer cylindrical section
- 212d:: clutch pressing section
- 212e:: inner cylindrical section
- 212f:: stopper (positioning protrusion)
- 213:: reinforcement ring
- 213a:: axial section
- 213b:: radial section
- 214:: piston seal
- 214a:: outer peripheral seal lip
- 214b:: inner peripheral seal lip
- 214c:: stopper (positioning protrusion)
- 202:: drive shaft
- 222:: hydraulic pressure supply passage
- 203:: housing
- 231:: radial section
- 232:: circular section
- 204:: multiple disc clutch
- 205:: piston insertion hole
- 208:: spring retainer
- 209:: stopper (snap ring)
- 210:: spring

### BEST MODE FOR CARRYING OUT THE INVENTION

The best mode for carrying out the present invention will be described in detail based on embodiments with reference to the accompanying drawings. The scope of the invention is not restricted to the dimensions, material, shapes and relative arrangement of components described in this embodiment unless otherwise described.

### (First embodiment)

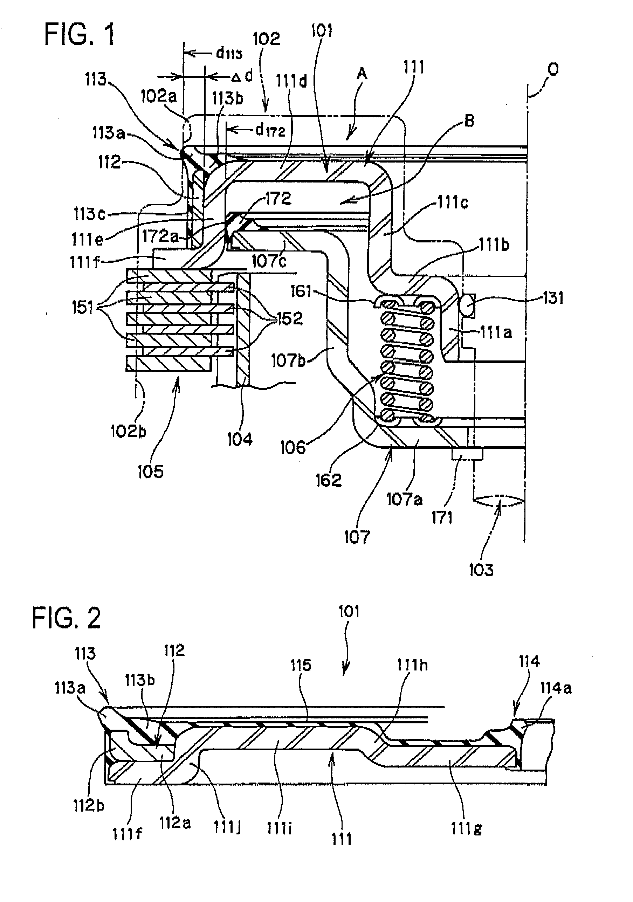

Hereinafter, the preferred first embodiment of the piston unit of the present invention will be described with reference to the drawings. FIG. 1 is a half sectional view of an example in which the piston unit of the present invention is applied to a piston 101 of an automobile automatic transmission by cutting along a plane passing the axis O together with part of the automatic transmission.

That is, the piston 101 corresponds to the piston described in claim 1 and comprises a piston main body 111, a reinforcement ring 112 fixed to this piston main body 111 and outer peripheral seal (piston seal) 113 coupled to both the piston main body 111 and the reinforcement ring 112 such that it is formed integrally on the outer peripheral section thereof.

The piston main body 111 is manufactured by press punching a metal sheet and comprises an inner cylindrical section 111a, a flange section 111b extended in the radial direction from an end of the inner cylindrical section, an intermediate cylindrical section 111c extending to an opposite direction to the inner cylindrical section 111a from an outer periphery of the flange section, an end plate section 111d extending in the radial direction from an end section of the intermediate cylindrical section, an outer cylindrical section 111e extending in the same direction as the intermediate cylindrical section 111c from an outer periphery of the end plate section and a flange-like clutch pressing section 111f bent from a tip end of this outer cylindrical section 111e to the outer periphery. A reinforcement ring 112 is manufactured by pressing a metal sheet or cutting a metal pipe and press-fit to the outer peripheral surface of the outer cylindrical section 111e of the piston main body 111 with an appropriate fasteningmargin allowance.

The outer peripheral seal (piston seal) 113 is made of rubber elastic material and has an outer peripheral seal lip 113a directed to an opposite direction of the multiple disc clutch 105 described later. Its base section 113b is bonded by vulcanization to both the outer surface of a bent section stretched from the end plate section 111d to the outer cylindrical section 111e of the piston main body 111 and the reinforcement ring 112 press-fit to the outer cylindrical section 111e integrally. An end in the axial direction of the reinforcement ring 112 reaches the root of the outer peripheral seal lip 113a of the outer peripheral seal (piston seal) 113.

That is, this outer peripheral seal (piston seal) 113 is formed by vulcanization and bonded to the piston main body 111 and the reinforcement ring 112 by vulcanization by setting the piston main body 111 coated with vulcanized adhesive agent in a predetermined rubber vulcanization forming mold with the reinforcement ring 112 press-fit to the outer cylindrical section 111e preliminarily, filling a ring-like cavity defined between the piston main body 111/the reinforcement ring 112 and the inner surface of the mold with non-vulcanized rubber material by clamping the mold and heating with a pressure.

Reference numeral 102 denotes a housing. This housing 102 accommodates a piston 101 such that it can be displaced in the axial direction and is formed with an inner surface configuration substantially analogous to the piston main body 111. Its inner peripheral end is coupled with or provided integrally with the drive shaft 103. The inner cylindrical section 111a of the piston main body 111 (piston 101) is inserted on the drive shaft 103 side such that it is movable axially through an O-ring 131 made of rubber elastic material and the outer periphery at the tip end of the outer peripheral seal lip 113a of the outer peripheral seal (piston seal) 113 makes a firm contact with the inner peripheral surface 102a of the outer peripheral section of the housing 102 slidably. A plurality of lubrication grooves extending in the circumferential direction are provided in a sliding surface of the outer peripheral seal lip 113a with respect to the housing 102.

Reference numeral 104 denotes a clutch hub coupled with the driven shaft side (not shown). Reference numeral 105 denotes a multiple disc clutch. The multiple disc clutch 105 has a structure in which a plurality of drive plates 151 capable of moving in the axial direction and in engagement with the inner periphery of the clutch accommodating cylinder section 102b of the housing 102, blocked from rotating and a plurality of driven plates 152 capable of moving in the axial direction and in engagement with the clutch hub 104 blocked from rotating are arranged alternately in the axial direction and blocked from loosing out with a retainer (not shown).

Reference numeral 106 denotes a spring for biasing the piston 101 in a direction of leaving the multiple disc clutch 105. This spring 106 is composed of a coil spring and a plurality of the springs 106 are arranged in the circumferential direction in a compressed state between the spring retainer 107 fixed to the drive shaft 103 side with a stopper 171 and the piston 101. Reference numeral 161 and 162 denote spring holders holding both ends of the spring 106.

More specifically, the spring retainer 107 is manufactured by press punching a metal sheet and comprised of a inner peripheral flange 107a, an intermediate cylindrical section 107b extending toward the outer peripheral position of the intermediate cylindrical section 111c in the piston main body 111 of the piston 101 from the outer periphery of the inner peripheral flange and an outer peripheral flange section 107c extending toward the outer periphery side from the end section of the intermediate cylindrical section so that an,end section on the outer periphery opposes the inner peripheral surface of the outer cylindrical section 111e of the piston main body 111 over a small distance. A spring retainer seal 172 made of rubber elasticmaterial is formed integrally at an end section on the outer periphery of this outer peripheral flange section 107c and the outer periphery of the seal lip 172a directed to an opposite direction to the multiple disc clutch 105 makes a firm contact with the inner peripheral surface of the outer cylindrical section 111e of the piston main body 111 slidably.

With the above-described structure, when hydraulic oil pressure is introduced into a pressure chamber A defined between the inner surface of the housing 102 and the piston 101 and sealed with the O-ring 131 and the outer peripheral seal (piston seal) 113 through an oil passage (not shown) and a pressure chamber B defined between the piston 101 and the spring retainer 107 and sealed with the spring retainer seal 172 is released through another oil passage (not shown), the piston 101 is displaced downward in FIG. 1 while compressing the spring 106 so that the clutch pressing section 111f of the piston main body 111 presses the multiple disc clutch 105 and consequently, the drive plates 151 and the driven plates 152 are engaged with each other frictionally. As a result, the multiple disc clutch 105 turns to a connecting state, so that drive torque of the drive shaft 103 is transmitted from the housing 102 to the driven shaft (not shown) through the multiple disc clutch 105 and the clutch hub 104.

When the hydraulic pressure in the pressure chamber A is released and hydraulic oil is supplied to the pressure chamber B, the piston 101 is displaced upward in FIG. 1 to reduce the volume of the pressure chamber A by a repulsive force of the compressed spring 106 so as to release the pressurization on the drive plate 151. Consequently, the multiple disc clutch 105 turns to a shutdown state, so that transmission of drive torque from the drive shaft 103 to the driven shaft is shut down.

In the piston 101, a difference between the inner diameter of the outer peripheral section inner peripheral surface 102a of the housing 102 with which the outer peripheral seal (piston seal) 113 makes a firm contact, that is, a sealing diameter d₁₁₃ of the outer peripheral seal (piston seal) 113 and the inner diameter of the outer cylindrical section 111e of the piston main body 111 with which the spring retainer seal 172 makes a firm contact, that is, a sealing diameter d₁₇₂ of the spring retainer seal 172 is relatively large in terms of design. Thus, a difference Δd between the outer diameter of the outer cylindrical section 111e and the sealing diameter d₁₁₃ of the outer peripheral seal (piston seal) 113 is large also.

However, the outer diameter of this reinforcement ring 112 substantially backs up the outer peripheral seal (piston seal) 113 because the reinforcement ring 112 is fitted to the outer peripheral surface of the outer cylindrical section 111e of the piston main body 111 according to this embodiment. In other words, there exists a structure in which part of rubber layer 113c extending from the base section 113b of the outer peripheral seal (piston seal) 113 is replaced with the reinforcement ring 112 composed of metal having a sufficient rigidity and an end thereof reaches the root of the outer peripheral seal lip 113a of the outer peripheral seal (piston seal) 113. Thus, the protruding length of the outer peripheral seal lip 113a in the outer peripheral seal (piston seal) 113 does not need to be increased or the thickness in the radial direction of the rubber layer 113c does not need to be increased depending on the difference Δd between the outer diameter of the outer cylindrical section 111e of the piston main body 111 and the sealing diameter d₁₁₃ of the outer peripheral seal (piston seal) 113, so that a required rigidity is secured in the outer peripheral seal lip 113a and the base section 113b.

Thus, if the pressure chamber A is in a high pressure state by introducing hydraulic oil pressure in order to turn the multiple disc clutch 105 into the connecting state by displacing the piston 101 downward, the outer peripheral seal lip 113a of the outer peripheral seal (piston seal) 113 can be prevented from making an excessive surface-contact with the inner peripheral surface 102a of the outer peripheral section of the housing 102 by hydraulic pressure in this pressure chamber A and finally, early abrasion and gouging of the outer peripheral seal (piston seal) 113 due to increases in contact area and contact load can be prevented to maintain pressure resistance and durability.

### (Second embodiment and third embodiment)

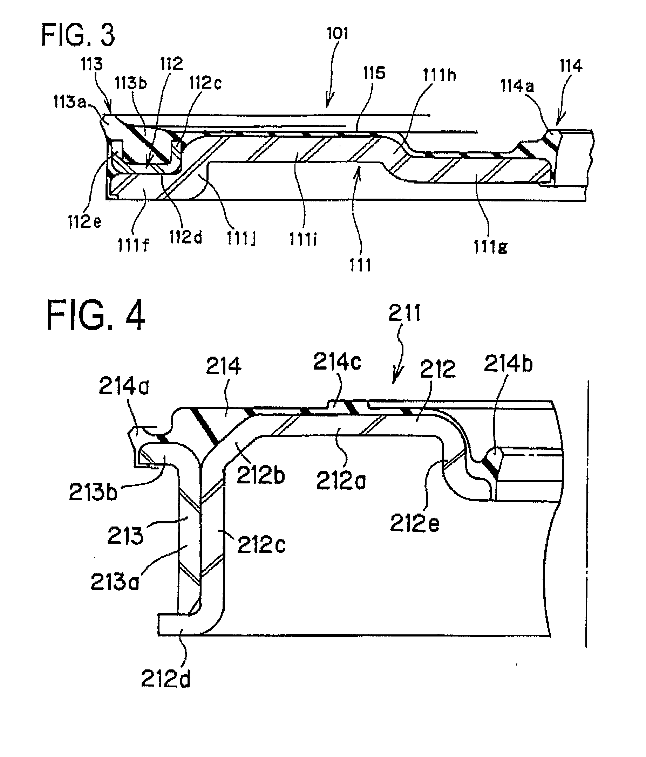

FIGS. 2, 3 are half sectional views of another example in which the piston unit of the present invention is applied to a piston 101 of the automobile automatic transmission by cutting along a plane passing the axis O.

The piston 101 shown in FIGS. 2, 3 is comprised of the circular piston main body 111, the reinforcement ring 112 fixed to the outer peripheral section of the circular piston main body, the outer peripheral seal (piston seal) 113 coupled with both the piston main body 111 and the reinforcement ring 17.2 and formed integrally with the outer peripheral section and the inner peripheral seal 114 provided integrally with the inner peripheral section of the piston main body 111. The piston 101 of this embodiment is displaced downward in the same Figure resisting an biasing force of a spring supported by a spring retainer by hydraulic pressure introduced into the pressure chamber basically like the embodiment of FIG. 1 so that the clutch pressing section 111f presses the drive plates of the multiple disc clutch to the driven plates so as to achieve frictional engagement.

The piston main body 111 is manufactured into a flat disc by press punching a metal sheet and comprised of an inner peripheral flange section 111g, an intermediate flange section 111i extending in the radial direction to the outer periphery of the inner peripheral flange section through an intermediate step section 111h, and a flange-like clutch pressing Section 111f formed on an outer periphery of the intermediate flange section through an outer peripheral step section 111j. The reinforcement ring 112 is manufactured by press punching a metal sheet and press-fit to the outer peripheral surface of the outer peripheral step section 111j which is a short cylinder of the piston main body 111 with an appropriate fastening margin.

The reinforcement ring 112 of the embodiment of FIG. 2 is comprised of a radial section 112a which is abutted to the clutch pressing section 111f of the piston main body 111 with its inner peripheral edge press-fit to the outer peripheral step section 111j of the piston main body 111 and an axial section 112b bent to an opposite direction to the clutch pressing section 111f from an outer periphery of the radial section, thereby having a substantially L-shaped section. Further, the reinforcement ring 112 of the embodiment of FIG. 3 is comprised of an inner peripheral axial section 112c press-fit to the outer peripheral step section 111j of the piston main body 111, a radial section 112d extending from an end of the inner peripheral axial section while abutted to the clutch pressing section 111f and an outer peripheral axial section 112e bent to an opposite direction to the clutch pressing section 111f from an outer periphery of the radial section, thereby having a substantially U-shaped section.

The outer peripheral seal (piston seal) 113 is formed of rubber elastic material and has the outer peripheral seal lip 113a directed to an opposite direction to the multiple disc clutch 105 in FIG. 1 described previously while its base section 113b is bonded by vulcanization integrally to both the outer surface of the outer peripheral step section 111j of the piston main body 111 and the reinforcement ring 112 press-fit to this outer peripheral step section 111j. The axial section 112b of the reinforcement ring 112 of the embodiment of FIG. 2, or the outer peripheral axial section 112e of the reinforcement ring 112 of the embodiment of FIG. 3 reaches the root of the outer peripheral seal lip 113a of the outer peripheral seal (piston seal) 113.

On the other hand, the inner peripheral seal 114 is formed of rubber elastic material like the outer peripheral seal (piston) 113 and continuous with the outer peripheral seal (piston seal) 113 through a membrane section 115 and bonded by vulcanization to the inner peripheral end section of the inner peripheral flange section 111g of the piston main body 111. This inner peripheral seal 114 has an inner peripheral seal lip 114a directed to an opposite direction to the multiple disc clutch 105 shown in FIG. 1 described previously in order to seal the inner periphery side of the pressure chamber A like the o-ring 131 of the embodiment of FIG. 1.

The outer peripheral seal (piston seal) 113 and the inner peripheral seal 114 are formed by vulcanization and simultaneously bonded by vulcanization by setting the piston main body 111 coated with vulcanized adhesive agent with the reinforcement ring 112 press-fit in advance to the outer peripheral step section 111j in a predetermined rubber vulcanization forming mold, filling an annular cavity defined between a surface stretching from the inner peripheral section of the piston main body 111 to the reinforcement ring 112 and the inner surface of the mold with non-vulcanized rubber material by clamping the mold and heating with a pressure.

In the embodiments of FIGS. 2 or 3, the axial section 112b or the outer peripheral axial section 112e of the reinforcement ring 112 fixed to the piston main body 111 reach the root of the outer peripheral seal lip 113a of the outer peripheral seal (piston seal) 113, so that a required rigidity of the outer peripheral seal lip 113a and the base section 113b is secured. Accordingly, the outer peripheral seal lip 113a of the outer peripheral seal (piston seal) 113 can be prevented by hydraulic oil pressure from making an excessive surface-contact with the inner peripheral surface of the outer peripheral section of the housing thereby consequently preventing early abrasion and gouging of the outer peripheral seal (piston seal) 113 due to increases in contact area and contact load leading to maintenance of pressure resistance and durability.

Although in the above embodiments, the reinforcement ring 112 is fixed by press-fitting to the piston main body 111, it may be fixed to the piston main body 111 by means other than press fitting, for example, welding or soldering. The sectional shape of the reinforcement ring 112 is determined appropriately considering the size of the base section 113b of the outer peripheral seal (piston seal) 113 and not restricted to the one shown in the Figure.

### (Fourth embodiment)

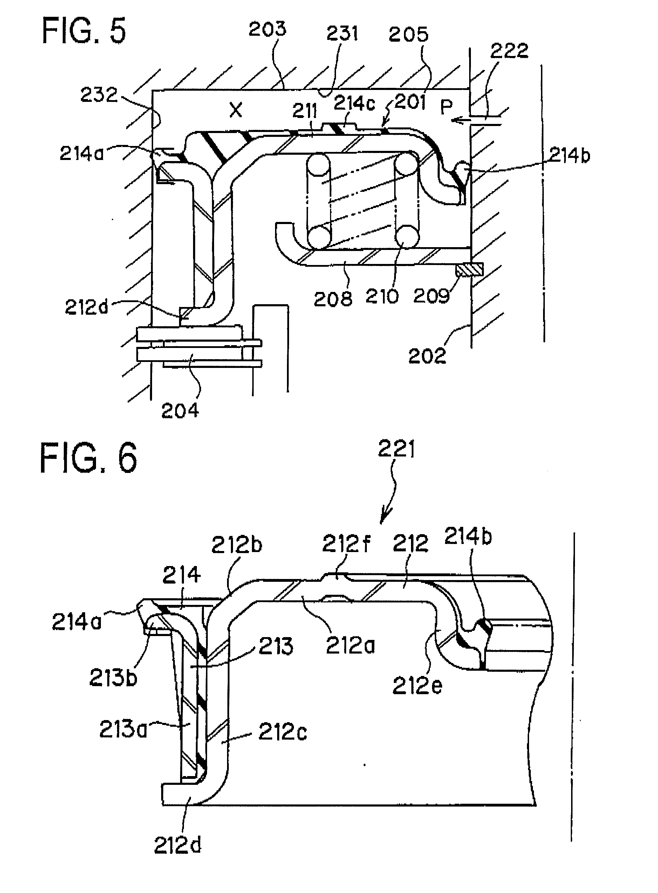

FIG. 4 is a schematic half sectional view showing the piston 211 according to the fourth embodiment of the present invention. FIG. 5 is a schematic half sectional view for explaining the schematic structure of a clutch adopting bonded piston seal 201 constituted of the piston 211 according to the fourth embodiment of the present invention.

As shown in Figures, the clutch includes a drive shaft 202 and a housing 203 having a substantially L-shaped section in its inner shape, provided on the outer peripheral side of the drive shaft 202.

The housing 203 has a radial section 231 and a circular section 232. The multiple disc clutch (pressing object section) 204 are accommodated in the inner peripheral side of the circular section 232. In the meantime, the sealing unit of this embodiment may be used to an ON/OFF unit of the brake as a brake plate.

An annular piston insertion hole (annular hole) 205 is formed between the inner peripheral surface of the circular section 232 and the outer peripheral surface of the drive shaft 202 and the piston 211 is inserted into that piston insertion hole 205 movably in the axial direction. In the meantime, the inner peripheral surface of the circular section 232 may be called outer peripheral surface of the piston insertion hole 205 and the outer peripheral surface of the drive shaft 202 may be called inner peripheral surface of the piston insertion hole 205.

The piston 211 comprises the piston main body 212, the reinforcement ring 213 and the piston seal 214 composed of rubber elastic body.

The piston main body 212 is a metal ring made of thin steel plate (for example, SAPH440) and comprised of a washer-like end plate section 212a facing the end surface of the radial section 231 of the housing 203, an inclined section 212b extending in an inclined state from the outer diameter end section of the end plate section 212a in the radially outward direction and toward the multiple disc clutch 204 side in the axial direction, an outer cylindrical section 212c extending from the outer diameter end section of the inclined section 212b toward the multiple disc clutch 204 in the axial direction, a clutch pressing section 212d extending from the end section on the multiple disc clutch 204 side in the axial direction of the outer cylindrical section 212c in the radially outward direction and an inner cylindrical section 212e extending from the inner diameter end section of the end plate section 212a toward the multiple disc clutch 204 side in the axial direction in the radially inward direction. The piston main body 212 is formed by molding (for example, pressing).

Here, the outer cylindrical section 212c constitutes the axial section of the present invention and the end plate section 212a and the inclined section 212b constitute the radial section of the present invention. The clutch pressing section 212d constitutes the outer diameter side radial section of the present invention and is provided to come into surface-contact with the multiple disc clutch 204.

The reinforcement ring 213 is comprised of an axial section 213a and a radial section 213b extending from the end section on the radial section 231 side of the housing 203 of the axial section 213a in the radially outward direction.

The axial section 213a is fitted to the outer periphery of the outer cylindrical section 212c of the piston main body 212 so that the reinforcement ring 213 is fitted to the piston main body 212. After the reinforcement ring 213 is fitted to the piston main body 212, the piston seal 214 is burnt (formed integrally) into the radial section 231 side of the housing 203 in the reinforcement ring 213 and the piston main body 212 in the axial direction. Here, the reinforcement ring 213 constitutes the reinforcement member of the present invention. In the meantime, the reinforcement ring 213 may be mounted to the piston main body 212 by, for example, welding.

The piston seal 214 is comprised of an outer peripheral seal lip 214a which makes a sealing contact with the inner peripheral surface of the circular section 232 slidably and an inner peripheral seal lip 214b which makes a sealing contact with the outer peripheral surface of the drive shaft 202 slidably. Here, the outer peripheral seal lip 214a constitutes the sealing member of the present invention and the inner peripheral seal lip 214b constitutes the inner peripheral side sealing member of the present invention.

The outer peripheral seal lip 214a extends obliquely toward the radial section 231 side of the housing 203 from the outer diameter end section of the radial section 213b of the reinforcement ring 213 in the radially outward direction, and the inner peripheral seal lip 214b extends obliquely toward the radial section 231 side of the housing 203 from the inner cylindrical section 212e in the radially inward direction.

A pressure chamber X is formed between the piston 211 and the housing 203 through the outer peripheral seal lip 214a and the inner peripheral seal lip 214b in this way.

A spring retainer 208 which is an annular restricting member for restricting motion in the axial direction is provided on the outer peripheral side of the drive shaft 202 such that it opposes the piston 211. This spring retainer 208 is a metal ring composed of thin steel plate (for example, SAPH440) and set to an inner diameter which allows it to attach and detach the drive shaft 202 easily. A motion in the axial direction, more specifically, of leaving the piston 211 is restricted by the stopper 209.

The outer diameter of the spring retainer 208 is smaller than the inner diameter of the outer cylindrical section 212c of the piston 211.

A plurality of springs 210 are provided as an biasing means for biasing the piston 211 in the direction of leaving the spring retainer 208 in the circumferential direction between the spring retainer 208 and the piston 211. A hydraulic pressure supply passage 222 communicating with the pressure chamber X is provided in the drive shaft 202.

With the above-described structure, when no line pressure is applied to the pressure chamber X, the stopper 214c (positioning protrusion) of the piston seal 214 makes contact with the radial section 231 of the housing 203 so that the piston 211 is kept stationary because the biasing force of the spring 210 is applied to the piston member 211.

When hydraulic pressure P is applied to the pressure chamber X through the hydraulic pressure supply passage 222 in the drive shaft 202 and the pressure rises, the piston member 211 moves to the multiple disc clutch 204 side in the axial direction resisting the biasing force of the spring 210 and the multiple disc clutch 204 is pressed by the clutch pressing section 212d of the piston 211, thereby transmitting drive power.

If the supply of pressure to the pressure chamber X is turned off in order to release transmission of drive power, the piston 211 is moved to the radial section 231 side of the housing 203 in the axial direction by the biasing force of the spring 210. Consequently, the piston 211 returns to its original position.

Because the clutch pressing section 212d which makes surface contact with the multiple disc clutch 204 is provided according to this embodiment, a rise in contact pressure or changes in surface pressure, which occurs when R section of the U-shaped sectional section of a conventional piston makes contact with the multiple disc clutch, can be suppressed.

By fitting the axial section 213a of the reinforcement ring 213 provided separately from the piston main body 212 to the outer cylindrical section 212c of the piston main body 212, the strength of the clutch pressing section 212d can be intensified. Thus, a rise in contact pressure and changes in surface pressure can be suppressed effectively.

The size of the flat section of the clutch pressing section 212d can be increased further because the strength of the clutch pressing section 212d can be increased, thereby effectively eliminating such a demerit that the contact pressure is increased or the surface pressure is changed.

Intensification in abrasion or deformation due to use in a long period or for long hours can be suppressed by suppressing an increase in contact pressure. Further changes in clutch characteristic due to changes in surface pressure with a passage of time can be suppressed because the changes in surface pressure can be suppressed. Therefore, occurrence of a functional problem which is feared conventionally can be suppressed.

Because the piston 211 has no U-shaped sectional section which is difficult to process like a conventional one, increase in quantity of manufacturing processes, likelihood of occurrence of cracks in R section of the U-shaped sectional section and inability of executing appearance inspection sufficiently about R section of the U-shaped sectional section, which have been feared conventionally, are eliminated. Then, working efficiency can be improved and manufacturing cost can be decreased by suppressing an increase of the quantity of manufacturing processes.

Further, because the piston 211 does not have the small gap which exists in the U-shaped sectional section as the conventional one has, cleaning for securing the adhering strength of adhesive agent can be executed sufficiently. Therefore, occurrence of peeling which is generated when bonding of the rubber elastic body becomes insufficient can be suppressed.

Because the piston 211 has no U-shaped sectional section, necessity of pouring the rubber elastic body into the valley of the U-shaped sectional section does not exist, so that no excessive amount of rubber elastic body is necessary unlike the conventional one. Further, because no rubber elastic body is poured into any concave section like a valley of the U-shaped sectional section, it is prevented that the rubber elastic body does not flow excellently thereby a formation failure occurs.

The axial section 213a of the reinforcement ring 213 provided separately from the piston main body 212 is positioned by the clutch pressing section 212d of the piston main body 212. Consequently, the relative position for fitting the reinforcement ring 213 to the piston main body 212 (to a what extent the reinforcement ring is to be fitted to the piston main body) can be determined easily and thus, the working efficiency can be improved. Further, by bringing the axial section 213a of the reinforcement ring 213 into contact with the clutch pressing section 212d of the piston main body 212, the sealing performance of the outer peripheral seal lip 214a can be stabilized further.

Further by bringing the axial section 213a of the reinforcement ring 213 into contact with the clutch pressing section 212d of the piston main body 212, a pressing force when the piston 211 presses the multiple disc clutch 204 can be stabilized. Consequently, the clutch pressing section 212d comes into surface contact with the multiple disc clutch 204 more stably, thereby suppressing an increase in contact pressure or changes in surface pressure effectively. Thus, the operation of the automatic transmission can be stabilized more.

If the seal lip is provided on the outer cylindrical section in a related art, there is a fear that the sealing performance of the seal lip may become unstable due to a behavior of the outer cylindrical section originating from deformation thereof accompanied by its motion when the piston 211 moves in the axial direction. According to this embodiment, the strength of the fitting section between the axial section 213a and the outer cylindrical section 212c can be intensified by fitting the axial section 213a of the reinforcement ring 213 provided separately from the piston main body 212 to the outer cylindrical section 212c of the piston main body 212. Thus, the sealing performance of the outer peripheral seal lip 214a provided on the reinforcement ring 213 can be stabilized.

By increasing the length of the fitting section between the axial section 213a of the reinforcement ring 213 provided separately from the piston main body 212 and the outer cylindrical section 212c of the.piston main body 212, the strength of the clutch pressing section 212d which makes surface contact with the multiple disc clutch 204 can be intensified or the sealing performance of the outer peripheral seal lip 214a can be stabilized more.

### (Fifth embodiment)

FIG. 6 is a schematic half sectional view showing the piston 221 according to the fifth embodiment of the present invention. Like reference numerals are attached to the same components as the above-mentioned fourth embodiment and description thereof is not repeated here. As shown in FIG. 6, the piston 221 has a stopper (positioning protrusion) 212f which makes contact with the radial section 231 of the housing 203 so as to keep the piston 221 stationary at end plate section 212a.

Although according to the fourth embodiment, the piston seal 214 is formed integrally after the reinforcement ring 213 is fitted to the piston main body 212, according to this embodiment, the reinforcement ring 213 having the integrally formed outer peripheral seal lip 214a is fitted to the piston main body 212 after the outer peripheral seal lip 214a is formed integrally on the reinforcement ring 213.

According to this embodiment, the seal lip can be formed with smaller amount of rubber elastic body because the reinforcement ring 213 is fitted to the piston main body 212 after the outer peripheral seal lip 214a is formed thereon integrally. As shown in the drawings, the fitting force between the reinforcement ring 213 and the piston main body 212 can be stabilized by forming the fitting section in the axial section 213a of the reinforcement ring 213 to the piston main body 212 with rubber elastic body and a dimensional allowance does not need to be limited strictly unlike fitting between metal rings.

Although the inner peripheral seal lip 214b may be formed integrally on the piston main body 212, a means for sealing an annular gap between the piston main body 212 and the outer peripheral surface of the drive shaft 202 is not restricted to the inner peripheral seal lip 214b. For example, it is permissible to provide an o-ring in the outer peripheral surface (in a groove therein) of the drive shaft 202 such that the O-ring is brought into sealing contact with the axial section (section provided substantially linearly in the axial direction) provided on the inner cylindrical section 212e. Because in this case, no rubber elastic body needs to be formed on the piston main body 212 integrally, the quantity of manufacturing processes and manufacturing cost can be reduced.

## Claims

1. A piston comprising:
a piston main body constituted of a radial section, an axial section extending in a direction of the axial direction from an outer diameter end section of the radial section, and an outer diameter side radial section extending to the radially outward direction from an end section on a side in the axial direction of the axial section, the piston main body being provided movably in the axial direction within an annular hole;
a reinforcement member provided on the outer periphery of the axial section of the piston main body; and
a sealing member provided on the reinforcement member and having a seal lip for sealing the outer peripheral surface side of the annular hole, wherein
the reinforcement member includes a section extending to the root of the seal lip.

2. The piston according to claim 1, wherein the reinforcement member is positioned by the outer diameter side radial section of the piston main body such that it is fitted over an entire area of the axial section.

3. The piston according to claim 1 or 2, wherein when the piston main body moves to one side in the axial direction, the outer diameter side radial section presses a pressing object section provided in the vicinity of the outer peripheral surface of the annular hole in a surface contact state.

4. The piston according to any one of claims 1 to 3 further comprising an inner peripheral sealing member provided on the piston main body for sealing the inner peripheral surface side of the annular hole, wherein
the sealing member and the inner peripheral side sealing member are formed integrally on the piston main body having the reinforcement member after the reinforcement member is fitted to the piston main body.

5. The piston according to any one of claims 1 to 3, wherein the sealing member is formed integrally on the reinforcement member and the reinforcement member is fitted to the piston main body after the sealing member is formed integrally.
